# EUROPEAN PATENT APPLICATION

(11) **EP 1 559 534 A1**
(43) Date of publication of application: **03.08.2005**
(21) Application number: 03715752.6
(22) Date of filing: 03.04.2003
(51) Int. Cl.: B29D 29/00, B29C 59/02, D21F 3/00, B29C 43/04

(54) **INDUSTRIAL ELASTIC BELT AND METHOD FOR MANUFACTURE THEREOF**

(30) Priority: 11.06.2002 JP 2002169513
(71) Applicant: Yamauchi Corporation, Hirakata-shi, Osaka 573-1132 (JP)
(72) Inventor: HIKIDA, Takahisa, c/o YAMAUCHI CORPORATION, Hirakata-shi, Osaka 573-1132 (JP)
(74) Representative: Hoffmann, Jörg Peter, Dr. Ing.
(86) International application number: PCT/JP2003/004301
(87) International publication number: WO 2003/103934

(57) **Abstract**

An elastic belt (11; 21; 31) formed of an elastic material endlessly in a cylinder has an inner surface (11b; 21b; 31b) and/or an outer surface (11a; 21 a: 31 a) thermally pressed and thus smoothed to provide an industrial elastic belt. Furthermore a method of producing an industrial elastic belt, including the step of thermally pressing an inner surface and/or an outer surface of an elastic belt formed of an elastic material endlessly in a cylinder. An industrial elastic belt having a surface enhanced in smoothness and a method of producing an industrial elastic belt that can help the belt to have a surface enhanced in smoothness, can thus be provided.

## Description

### Technical Field

The present invention relates to industrial elastic belts employed in a variety of industrial fields such as manufacture of paper, magnetic recording media, fiber and the like.

### Background Art

An industrial elastic belt is required to be an elastic belt having a smooth inner surface and/or a smooth outer surface.

An industrial elastic belt required to have a smooth inner surface includes a shoe press belt or the like. Shoe press is practically used for press for dehydration in the paper making industry. Shoe press, as simply described, is to use a press shoe having a prescribed width, as seen in a direction in which an elastic belt runs, to press the elastic belt against a press roll to provide a pressure area of a large width and pass a web of material (wet web) through the area to pressurize (dehydrate) the web. Roll press employing two rolls for press exerts a linear pressure on an object to be pressurized, whereas shoe press, employing a press shoe having a prescribed width, as seen in a direction in which an elastic belt runs, can exert pressure on the object over an area. Shoe press can thus provide an increased nip width and thus efficiently process (dehydrate) the object. The use of shoe press is also being considered for use in industries such as manufacture of paper, magnetic recording media and the like to calendar a web of material.

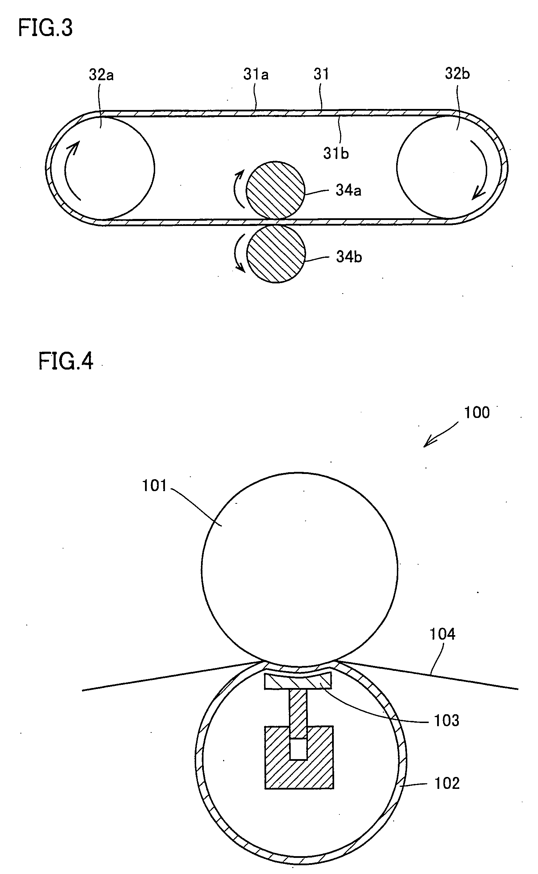

Fig. 4 is a schematic cross section of a shoe press apparatus used in the shoe press as described above. In Fig. 4, a shoe press apparatus 100 includes a rapidly rotating press roll 101, an elastic belt 102 opposite press roll 101, and a press shoe 103 located inside elastic belt 102 to press elastic belt 102 against press roll 101. A web of material 104 such as wet web passes between elastic belt 102 and press roll 101. Press shoe 103 has a surface having a prescribed width as seen along the running elastic belt 102 and is smoothly recessed to correspond to a surface of press roll 101. Thus between press roll 101 and elastic belt 102 there is provided a pressure area of a large width. The web of material 104 is pressed in this pressure area. Between elastic belt 102 and press shoe 103 a lubricant oil is supplied, and as press roll 101 rotates, elastic belt 102 is accordingly driven to rotate sliding on press shoe 103.

A dehydrating shoe press employed in the paper making industry, wet web served as the web of material 104 is placed on an endless felt or sandwiched between two endless felts and passed between press roll 101 and elastic belt 102. More specifically, between the web of material 104 and elastic belt 102 the felt exist and the web of material 104 and elastic belt 102 do not directly contact each other. Furthermore for the dehydrating shoe press elastic belt 102 often has an outer surface provided with a large number of grooves along the belt to achieve more efficient dehydration.

For the Fig. 4 shoe press apparatus 100 if elastic belt 102 has an inner surface poor in smoothness elastic belt 102 and press shoe 103 have poor lubrication therebetween, and press roll 101 needs to be driven by an accordingly increased force resulting in increased power consumption. Furthermore, if elastic belt 102 and press shoe 103 have poor lubrication therebetween, the elastic belt 102 inner surface is melted by friction and may be damaged earlier than expected. Accordingly, shoe press apparatus 100 is required to have elastic belt 102 having an inner surface enhanced in smoothness.

Furthermore if the elastic belt directly contacts a web of material the elastic belt is occasionally required to have a smooth outer surface. An industrial elastic belt required to have a smooth outer surface includes a calendar belt used to calendar webs of material in a variety of industries, transfer and coating belts used in the paper making industry, and the like. For these applications if the elastic belt has an insufficiently smooth surface, the surface captures paper dust and other foreign matters negatively affecting web products in quality. The calendar belt is required to have a smooth outer surface, in particular, as the surface's protrusions and depressions directly affect a web product in quality.

An industrial elastic belt required to have smoothness on both inner and outer surfaces includes an elastic belt employed for example in a calendaring shoe press apparatus. For the calendaring shoe press apparatus, the web of material 104 shown in Fig. 4 is paper, magnetic tape material or the like and runs in direct contact with a surface of elastic belt 102. Accordingly, elastic belt 102 is required to have a smooth inner surface to maintain lubrication between the belt and press shoe 103 and a smooth outer surface to maintain a web product in quality.

Conventionally, an elastic belt has inner and outer surfaces smoothed by polishing the surfaces. Polishing the surfaces to be smooth entails using a porous grindstone of a small count to roughly finish the surfaces and subsequently exchanging grindstones in steps to gradually increase the grind stone's count to work the surfaces until a target finish precision is attained. Furthermore, when the grindstone clogs the stone must be exchanged, which is extremely cumbersome. Furthermore, when the surface is polished to be finished, a surface roughness lower than 30 µm (Rz) is significantly difficult to achieve.

An elastic belt is smoothed by a method, as disclosed in Japanese Patent Laying-Open Nos. 64-45888 and 11-256492. More specifically, a cylindrical mandrel having a smoothly polished surface is prepared and coated with liquid urethane and then set and a molded product is then removed from the mandrel to produce the elastic belt. This method can dispense with polishing the elastic belt's inner surface. The method, however, requires polishing as described above to smooth the elastic belt's outer surface. Furthermore, a mandrel of a significantly large size must be prepared for each different size of elastic belt, inviting an increased cost for producing the elastic belt.

In view of the above circumstances the present invention contemplates an industrial elastic belt having a surface enhanced in smoothness and a method of producing an industrial elastic belt that can help the belt to have a surface enhanced in smoothness.

### Disclosure of the Invention

To achieve the above object the present inventor has conducted a thorough study and found that an industrial elastic belt having a surface thermally pressed can achieve the above object, and the present inventor has thus arrived at the present invention.

More specifically the present invention provides an industrial elastic belt formed of an elastic belt formed of an elastic material endlessly in a cylinder and having an inner surface and/or an outer surface thermally pressed and thus smoothed.

Desirably the inner surface and/or the outer surface have/has a surface roughness of at most 20 µm (Rz).

The present invention also provides a method of producing an industrial elastic belt, including the step of thermally pressing an inner surface and/or an outer surface of an elastic belt formed of an elastic material endlessly in a cylinder.

Preferably the step of thermally pressing employs a hot plate having a temperature of 50 to 170°C to press the belt's inner surface and/or outer surface with a pressure of 0.05 to 10 MPa for 5 seconds to 60 minutes.

Furthermore preferably in the step of thermally pressing, the elastic belt is run at a rate of 0.1 to 10 m/min., while a roll having a temperature of 50 to 170°C is used to nip the elastic belt's inner surface and/or outer surface with a pressure of 0.5 to 200 kN/m.

### Brief Description of the Drawings

Fig. 1 is a schematic cross section showing an example of a method using a hot plate to thermally press an elastic belt.
Fig. 2 is a schematic cross section showing an example of a method employing a press roll to thermally press an elastic belt.
Fig. 3 is a schematic cross section showing an example of a method employing upper and lower press rolls to thermally press an elastic belt.
Fig. 4 is a schematic cross section of a conventional shoe press apparatus.

### Best Mode for Carrying Out the Invention

Hereinafter the present invention in embodiment will be described.

### Elastic Belt

The present invention employs an elastic belt in the form of a cylinder formed of elastic material endlessly and having one or both of inner and outer surfaces of a reinforced base material formed for example of an endless, multi-woven fabric and coated with polyurethane or similar elastic material. Alternatively, an endless belt formed of elastic material and having a reinforcement string buried therein is used.

### Thermal Press

The present industrial elastic belt is thermally pressed to have one or both of inner and outer surfaces smoothed. If an elastic belt has only one of inner and outer surfaces of reinforcement base material coated with elastic material, the elastic material coated surface alone is preferably, thermally pressed. If an elastic belt has inner and outer surfaces both formed of elastic material, then the inner surface alone, the outer surface alone or both surfaces is/are preferably, thermally pressed. Herein the inner and outer surfaces refer to inner and outer surfaces, respectively, of an endlessly formed, cylindrical industrial elastic belt.

Suitably, the elastic belt has a surface thermally pressed for example by a hot plate, a roll or the like. This allows the present industrial elastic belt to have a surface increased in smoothness and also allows an inner surface alone, an outer surface alone or both surfaces to be readily smoothed. Furthermore, thermally pressing an elastic belt having a surface of elastic material polished to some extent is preferable as such can provide the elastic belt with a further smooth surface.

### Thermal Press Employing a Hot Plate

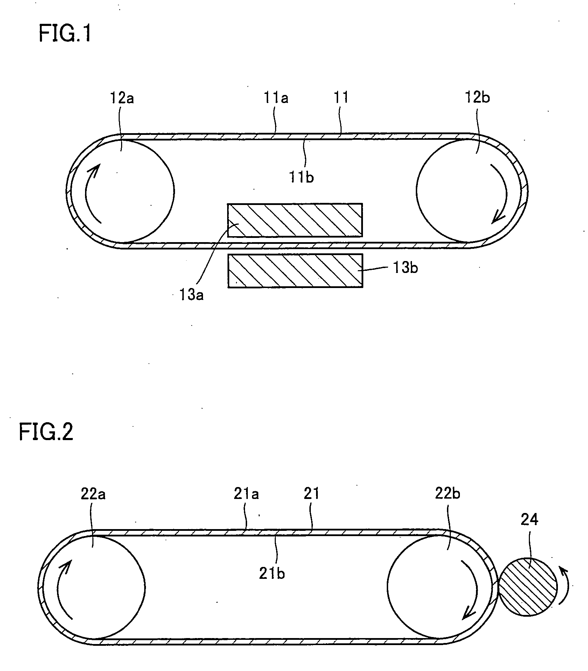

A hot plate is used to thermally press an elastic belt, by way of example, as will be described hereinafter with reference to Fig. 1. In Fig. 1, an elastic belt 11 is set around two rotatable rolls 12a and 12b and held movably. Upper and lower hot plates 13a and 13b each have a smooth surface and are arranged to be capable of pressing each other and releasable, and elastic belt 11 is partially sandwiched and thermally pressed between upper and lower hot plates 13a and 13b. The belt is thermally pressed by upper and lower hot plates 13a and 13b having a temperature of 50 to 170°C, preferably 100 to 170°C, more preferably 130 to 170°C and exerting on the belt a pressure of 0.05 to 10 MPa, preferably 1.0 to 10 MPa, more preferably 1.0 to 4.0 MPa for 5 seconds to 60 minutes, preferably 1 to 60 minutes, more preferably 15 to 60 minutes. After the elastic belt is thermally pressed, rolls 12a and 12b are rotated to move elastic belt 11 by a prescribed width and the belt then has a thermally unpressed portion thereof thermally pressed. This process is repeated to uniformly, thermally press elastic belt 11 entirely to smooth the elastic belt 11 outer and inner surfaces 11a and 11b.

Note that upper hot plate 13a alone may be heated to thermally press elastic belt 11 to smooth inner surface 11b alone. Furthermore, lower hot plate 13b alone may be heated to thermally press elastic belt 11 to smooth outer surface 11a alone.

### Thermal Press Employing Press Roll

A press roll is employed to thermally press an elastic belt, by way of example, as will now be described hereinafter with reference to Fig. 2. In Fig. 2, an elastic belt 21 is set around two rotatable rolls 22a and 22b and held movably at a prescribed rate, and a mirror-finished press roll 24 is pressed against roll 22b. Elastic belt 21 running at a rate of 0.1 to 10 m/min is thermally pressed by roll 22b and press roll 24 having a temperature of 50 to 170°C and exerting on elastic belt 21 a nip pressure of 0.5 to 200 kN/m, preferably 10 to 200 kN/m. Thermally pressing as described above allows elastic belt 21 to have outer and inner surfaces 21a and 21b both smoothed.

Note that if one of roll 22b and press roll 24 is heated to thermally press elastic belt 21, only one of outer and inner surfaces 21a and 21b can be smoothed. Furthermore, turning the thermally pressed elastic belt 21 inside out and then similarly, thermally press the belt can also smooth the belt's inner and outer surfaces. Furthermore, rather than roll 22b and press roll 24, roll 22a and press roll 24 may be used to thermally press the belt. Furthermore, press roll 24 can be arranged adjacent to each of rolls 22a and 22b to allow roll 22a and press roll 24, and roll 22b and press roll 24 to be both used to thermally press the belt.

### Thermal Press Using Upper and Lower Press Rolls

Upper and lower press rolls are used to thermally press an elastic belt, by way of example, as will now be described hereinafter with reference to Fig. 3. In Fig. 3, an elastic belt 31 is set around two rotatable rolls 32a and 32b and held movably at a prescribed rate, and elastic belt 31 is sandwiched and thus thermally pressed between mirror-finished, upper and lower press rolls 34a and 34b. Elastic belt 31 running at a rate of 0.1 to 10 m/min is thermally pressed by upper and lower press rolls 34a and 34b having a temperature of 50 to 170°C and exerting on elastic belt 31 a nip pressure of 0.5 to 200 kN/m, preferably 10 to 200 kN/m. Thermally pressing as described above allows elastic belt 31 to have outer and inner surfaces 31a and 31b both smoothed.

Note that upper press roll 34a alone can be heated to smooth elastic belt 31 only at inner surface 31b. Furthermore, lower press roll 34b alone can be heated to smooth elastic belt 31 only at outer surface 31a.

The present invention provides thermally pressing, as described above, to allow an elastic belt to have a smooth surface. This can eliminate the necessity of frequently exchanging grindstones, as required in a conventional polishing step, and also dispense with a large-scale mandrel for each different size of elastic belt so that the elastic belt's inner surface alone, an outer surface alone or both surfaces can be readily enhanced in smoothness.

### Surface Roughness

An industrial elastic belt thus obtained preferably has an inner surface and/or an outer surface having a surface roughness of at most 20 µm (Rz), more preferably at most 10 µm (Rz). The present industrial elastic belt can contact an object with reduced friction therebetween, and the belt can be less worn and the apparatus can be driven by reduced power. Furthermore, the belt can have a surface capturing fewer foreign matters, and a product enhanced in quality can be provided. Note that surface roughness (Rz) is a maximum roughness in height as defined by JIS-B0601 (2001).

### Application

The present industrial elastic belt can suitably be used in a variety of industries such as manufacture of paper, magnetic recording media, fiber and the like as shoe press, calendar, transfer and painting belts.

In particular, an elastic belt having a smooth inner surface is suitably used as a shoe press belt. If the elastic belt having the smooth inner surface is used as the shoe press belt, the elastic belt and a press shoe can have excellent lubrication therebetween, and an opposite press roll can be driven by an accordingly reduced force and the shoe press apparatus's power consumption can accordingly be reduced. Furthermore, the elastic belt can be prevented from having an inner surface melted by friction and can thus be enhanced in durability.

Furthermore, an elastic belt having a smooth outer surface can suitably be used as a calendar, transfer, painting or similar elastic belt directly contacting a web of material. When the elastic belt having the smooth outer surface is thus used, the belt's surface captures less paper dust and/or similar, fewer foreign matters. This can prevent a web product from having poor quality attributed to a foreign matter otherwise adhering to the web. In particular, the belt's surface is excellent in smoothness, and using the belt as a calendar belt allows a web product to be satisfactorily calendared.

An elastic belt having inner and outer surfaces both smoothed can suitably be used as a shoe press belt employed in calendaring. If the elastic belt having inner and outer surfaces smoothed is used as the shoe press belt employed in calendaring, the elastic belt and a press shoe can have excellent lubrication therebetween and the elastic belt's surface can capture less paper dust and/or similar, fewer foreign matters, providing a satisfactorily calendared web product.

### Example

Hereinafter, the present invention will be described with reference to an example. It should be noted, however, that the present invention is not limited thereto.

Examples 1-7 provided industrial belts produced as described hereinafter. Initially, a reinforcement base material formed of a warp quadruply woven fabric having a thickness of 2.3 mm had liquid polyurethane sufficiently impregnated therein and also had inner and outer surfaces both coated with liquid polyurethane. The liquid polyurethane was then set to produce an elastic belt of a durometer hardness of A95 on the reinforcement base material at inner and outer surfaces.

The elastic belt then had the inner and outer surfaces cut and then polished with a grindstone to provide an elastic belt including an inner polyurethane layer of 1.0 mm thick and an outer polyurethane layer of 1.7 mm thick and having a total thickness of 5 mm with inner and outer surfaces having a surface roughness of 30 µm (Rz).

Finally, two hot plates having a surface roughness of 1 µm (Rz) were used to sandwich the elastic belt to thermally press the belt under the conditions provided in Table 1 to smooth the inner and outer surfaces. Examples 1-7 provided industrial elastic belts having surface roughness (Rz), as shown in Table 1.

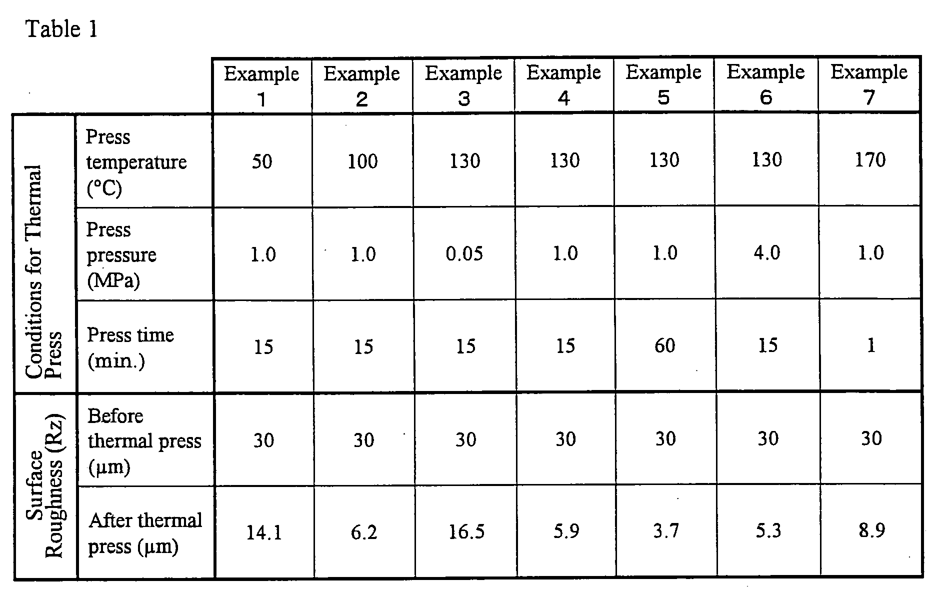

As can be seen from Table 1, Examples 1-7 provide industrial elastic belts having a surface significantly smoother than before they are thermally pressed.

Although the present invention has been described and illustrated in detail, it is clearly understood that the same is by way of illustration and example only and is not to be taken by way of limitation, the spirit and scope of the present invention being limited only by the terms of the appended claims.

### Industrial Applicability

Thus the present invention provides an industrial elastic belt having a surface enhanced in smoothness and a method of producing an industrial elastic belt capable of helping the belt to have a surface enhanced in smoothness.

## Claims

1. An industrial elastic belt formed of an elastic belt (11; 21; 31) formed of an elastic material endlessly in a cylinder and having an inner surface (11b; 21b; 31b) and/or an outer surface (11a; 21a: 3 1 a) thermally pressed and thus smoothed.

2. The industrial elastic belt of claim 1, wherein said inner surface (11b; 21b; 31b) and/or said outer surface (11a; 21 a: 3 1 a) have/has a surface roughness of at most 20 µm (Rz).

3. A method of producing an industrial elastic belt, comprising the step of thermally pressing an inner surface (11b; 21b; 31b) and/or an outer surface (11a; 21a: 31a) of an elastic belt (11; 21; 3 1) formed of an elastic material endlessly in a cylinder.

4. The method of producing an industrial elastic belt, of claim 3, wherein the step of thermally pressing employs a hot plate (13a; 13b) having a temperature of 50 to 170°C to press said inner surface (11b) and/or said outer surface (11a) of said elastic belt (11) with a pressure of 0.05 to 10 MPa for 5 seconds to 60 minutes.

5. The method of producing an industrial elastic belt, of claim 3, wherein in the step of thermally pressing, said elastic belt (21; 31) is run at a rate of 0.1 to 10 m/min., while a roll (22a; 22b; 24; 34a; 34b) having a temperature of 50 to 170°C is used to nip said elastic belt's inner surface (21b; 31b) and/or outer surface (21a; 31a) with a pressure of 0.5 to 200 kN/m.
